# EUROPEAN PATENT SPECIFICATION

(11) **EP 0 778 163 B1**
(45) Date of publication and mention of the grant of the patent: **10.05.2000**
(21) Application number: 96308804.2
(22) Date of filing: 04.12.1996
(51) Int. Cl.: B60C 11/00, B60C 11/04

(54) **Pneumatic tyre**
Luftreifen
Pneumatique

(30) Priority: 07.12.1995 JP 31915195
(43) Date of publication of application: 11.06.1997
(73) Proprietor: SUMITOMO RUBBER INDUSTRIES LIMITED, Kobe-shi, Hyogo-ken (JP)
(72) Inventor: Iwamura, Wako, Kobe-shi, Hyogo-ken (JP)
(74) Representative: Stewart, Charles Geoffrey

(56) References cited:
- EP-A- 0 261 692
- DATABASE WPI Week 02 Derwent Publications Ltd., London, GB; AN 97-016129 XP002028086 & JP 08 281 831 A (YOKOHAMA RUBBER CO LTD) , 29 October 1996
- DATABASE WPI Week 36 Derwent Publications Ltd., London, GB; AN 96-357941 XP002028087 & JP 08 169 210 A (YOKOHAMA RUBBER CO LTD) , 2 July 1996
- CONTINENTAL: "Technischer Ratgeber Nutzfahrzeug-Reifen 1990/91" , , CONTINENTAL AG.,

## Description

The present invention relates to a pneumatic tyre, the tread portion of which is provided with a special marking for a visual external inspection of a tyre uniformity.

In general, the tread pattern of a pneumatic tyre is formed during vulcanising the tyre by the softened tread rubber being pressed into a negative impression of the tread pattern in a mould. The softened tread rubber is pushed by the protrusions of the impression which correspond to the tread grooves, and the rubber moves or flows towards both sides thereof. The protrusions however, function as a block which hinder the rubber from moving. Therefore, for example, if a raw tread rubber is applied, displaced towards one side of the tyre equator, the tread portion on the other side somewhat lacks rubber. As a result, when the tyre is demoulded, tread elements such as blocks, ribs and the like are deformed by non-uniform residual stresses in the rubber. Even if the raw tread rubber strip is correctly applied, a similar phenomenon occurs when the tread portion is provided with a circumferential groove extending zigzag with a relatively large amplitude. Thus, the uniformity of the tyre is liable to be poor.

Usually, in order to remove bad or poor uniformity tyres, a visual external inspection is made as a primary examination.

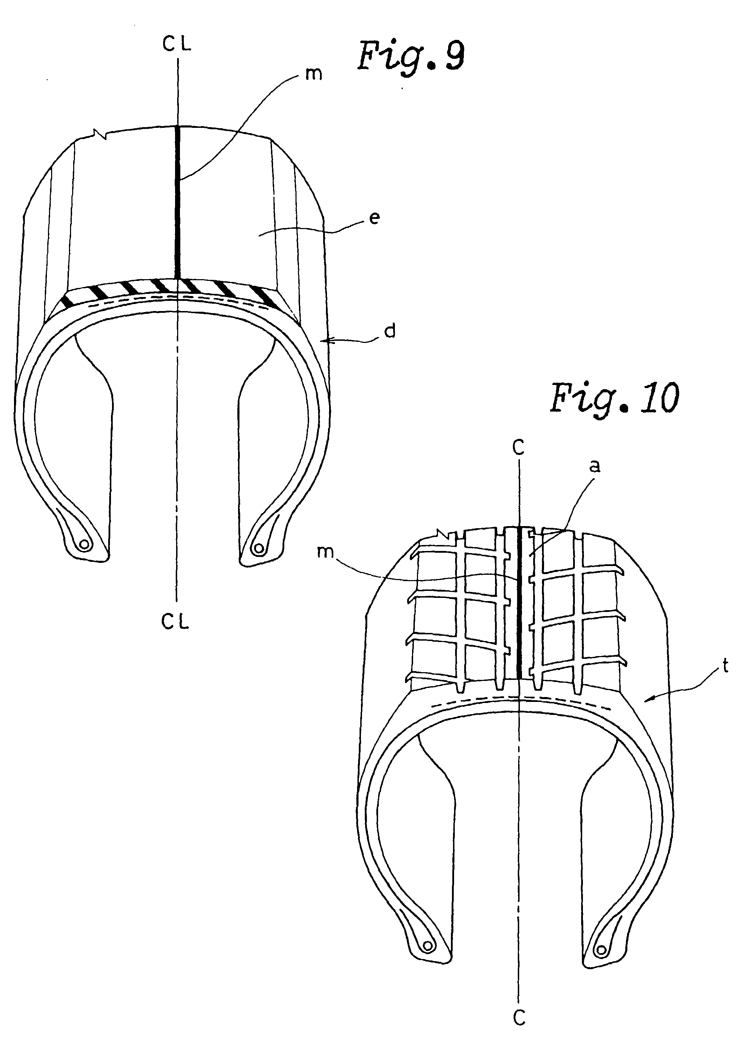

If a tread portion is provided with only straight circumferential grooves, the inspection can be made relatively easily by drawing a straight line (m) on a raw tread rubber (e) using colour paints as shown in Fig.9 and then checking if the painted line (m) deviates when the demoulded tyre (t) is rotated around it axis as shown in Fig.10.

This method is however, unusable or difficult to use with asymmetrical tread patterns, tread patterns comprising zigzag circumferential grooves and the like because a painted line readily run out together with the rubber.

It is therefore, an object of the present invention to provide a pneumatic tyre having a tread pattern by which a visual external inspection of tyre uniformity can be made easily.

A tyre, according to the preamble of claim 1, having a small groove or slit extending along the circumferential centreline of the tread is known from publication Technischer Ratgeber Nutzfahrzeugreifen - Continental 1990/1991.

According to the present invention, a pneumatic tyre comprises at least one groove extending continuously in the circumferential direction in a zigzag configuration to define at least two tread elements, at least one of said tread elements extending across the tyre equator, wherein said at least one tread element is provided with an emboss mark extending straight in the tyre circumferential direction, said emboss mark being disposed substantially on the tyre equator, characterised in that said at least one circumferential groove is a zigzag groove centred on the tyre equator, and said at least two tread elements comprise blocks on one side of the zigzag groove and blocks on the other side of the zigzag groove, and the blocks are provided on the top faces with protrusions which extend straight in the tyre circumferential direction to collectively define said emboss mark.

Preferably, the height of the emboss mark is more than 0.2 mm but less than 1.0 mm, and the width of the emboss mark is more than 0.3 mm but less than 2.0 mm.

Therefore, in the pneumatic tyre according to the present invention, it is easy to examine the uniformity of the tyre by inspecting the emboss mark on the tyre whilst it is rotated around its axis and seeing whether the mark deviates or not.

Embodiments of the present invention will now be described in detail in conjunction with the accompanying drawings.
Fig.1 is a developed plan view of an embodiment of the present invention showing an example of the tread pattern;
Fig.2 is a cross sectional view showing an example of the emboss mark;
Fig.3 is a cross sectional view showing another example of the emboss mark which comprises a pair of parallel protrusions;
Fig.4 being no embodiment of the invention, is a developed plan view showing another tread pattern;
Fig.5, being no embodiment of the invention is a developed plan view showing still another tread pattern;
Fig.6 is a cross sectional view of an example of the tyre mould to form the emboss mark;
Fig.7 is an enlarged cross sectional view showing a central part thereof;
Fig.8 is a cross sectional view of another example of the tyre mould; and
Figs.9 and 10 are partial perspective views showing a prior art tyre.

The present invention was made on the premise that on the tyre equator there is no tread element, which is defined by two straight grooves each disposed on each side of the tyre equator, such as a circumferentially continuous straight rib, a row of circumferentially discontinuous blocks or the like. Thus, the tread pattern shown in Fig.10 is outside the scope of the present invention.

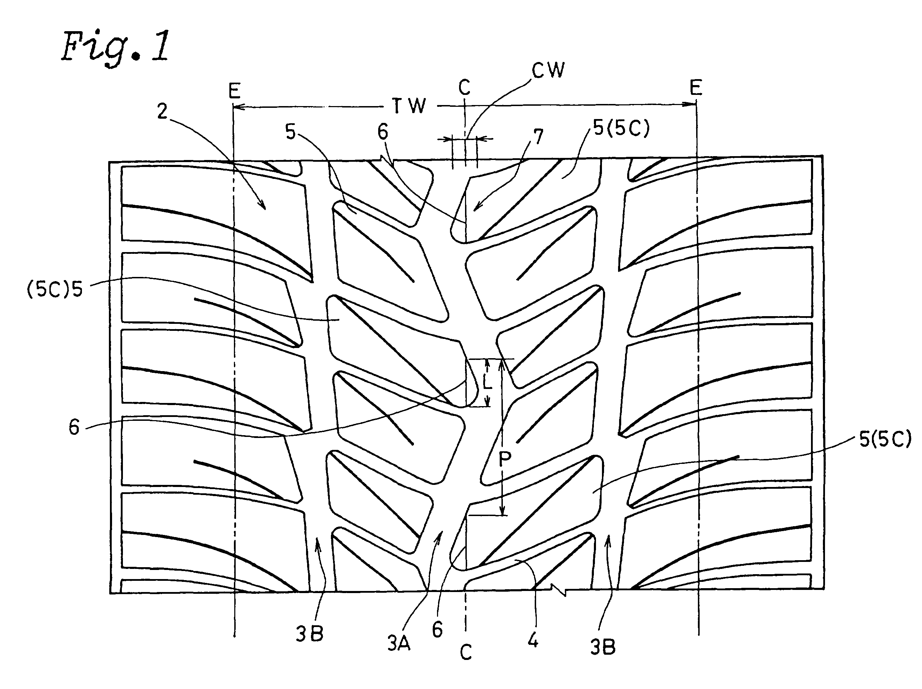

In Fig.1, the tread portion 2 is provided with a plurality of circumferential grooves 3, which comprise a central groove 3A extending zigzag around the tyre equator C as the centre of the amplitude of the zigzag, and a pair of outer grooves 3B disposed one on each side of the central groove 3A and extending in the circumferential direction with a smaller zigzag amplitude than the central groove 3A.

Further, the tread portion 2 is provided with axial grooves 4 extending from one of the tread edges E to the other, waving gently to define a directional pattern.

The circumferential grooves 3 have a width of from 5 to 20 mm when measured at the tread surface along the groove widthwise direction or the normal direction to the groove centreline. The groove depth is in the range of from 6 to 15 mm.

The axial grooves 4 have a width of from 2 to 8 mm, and the depth is in the range of from 6 to 15 mm.

Thus, the tread portion is divided by the circumferential grooves 3A and 3B and the axial grooves 4, and a large number of blocks 5 are formed in the tread 2.

The blocks 5 include blocks 5C extending axially across the tyre equator C. The blocks 5C consist of blocks on one side of the central groove 3A and blocks on the other side of the central groove 3A. The blocks 5C are each provided in the top surface with a straight protrusion 6 which collectively defines an emboss mark 7. That is, the emboss mark 7 consists of straight protrusions 6 on each of the blocks 5C. Each of the straight protrusions 6 extends on the tyre equator C.

The emboss mark 7 is small so as to not alter the running performance of the tyre. If the emboss mark is too large, the ground contacting area is decreased.

The height d of the protrusion 6 is preferably more than 0.2 mm but less than 1.0 mm. If the height d is less than 0.2 mm, the protrusions 6 are difficult to recognise. If the height d is more than 1.0 mm, running performance is liable to be altered.

The axial width W of the protrusion 6 is preferably more than 0.3 mm but less than 2.0 mm, in this embodiment 0.6 mm. If the width W is less than 0.3 mm, it is very difficult to recognise the mark. If the width W is more than 2.0 mm, accuracy of the visual external inspection is liable to be lost.

When the emboss mark 7 is composed of discontinuous protrusions, the circumferential length L of the protrusion 6 is set to be more than 10 mm, and the circumferential pitch length P of the protrusions 6 is less than 10 times the length L. If the length L is less than 10 mm, or the pitch P is more than 10 times the length L, there is no effect on the running performance, but the mark 7 is difficult to recognise.

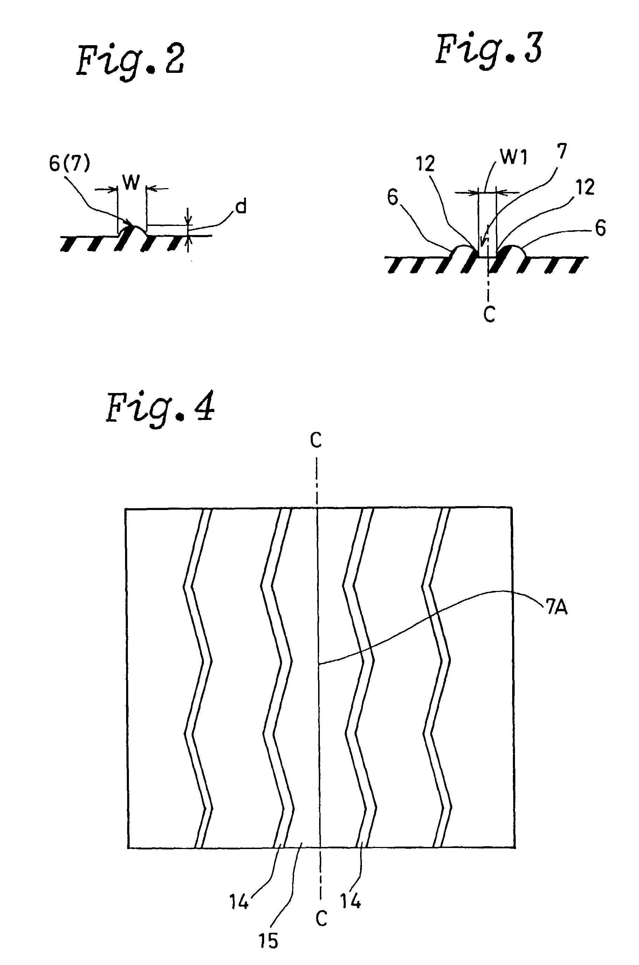

In Fig.2, the cross sectional shape of the protrusion is a half circle. The radius thereof is 0.3 mm thus the height d is 0.3 mm. For the cross sectional shape of the protrusion 6, it is also possible to use polygonal shapes for example a triangle or rectangle or the like in addition to a half circle.

As the pneumatic tyre has a tread profile symmetrical about the tyre equator C, the best accuracy is easily obtained by positioning the emboss mark on the tyre equator. Preferably, the emboss mark 7 is formed just on the tyre equator C as shown in Fig.1, but it is also possible to form it in the vicinity CW of the equator C, which ranges 5 % of the tread width TW, preferably 3%, more preferably 1% of TW to obtain an accurate result of the uniformity examination. Whilst, one emboss mark must be formed on or near the tyre equator, it is also possible to dispose emboss marks in other portions such as the shoulder portions.

Fig.3 shows a modification of the emboss mark 7 which consists of a pair of axially spaced protrusions 6, wherein the individual protrusion 6 is almost the same as that in Figs.1 and 2 except that it is not disposed just on the tyre equator. The protrusions 6 are disposed parallel to each other at axially spaced, symmetrical positions about the tyre equator C. The distance W1 between the protrusions 6 (between the edges 12) is more than 0.3 mm and less than 2.0 mm.

Fig.4 shows another example of a tread portion, being no embodiment of the invention, which comprises parallel zigzag grooves 14 dividing the tread portion into at least three, in this example five, circumferentially continuous ribs including a central zigzag rib 15 on the tyre equator C. In this example, the central zigzag rib 15 is provided with an emboss mark 7A defined by a circumferentially continuous protrusion 6 as shown Fig.2.

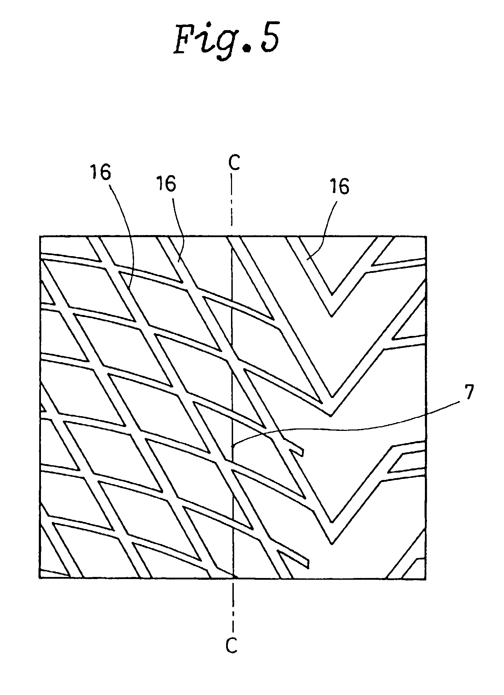

Fig.5 further shows another example of a tread portion, being no embodiment of the invention, which is provided with grooves 16 having a V-shaped configuration extending from one of the tread edge to the other and axial grooves extending at a small angle to the tyre axial direction, whereby rhombic blocks are formed on the tyre equator C, and also, zigzag grooves are formed in a mesh-like formation. All the blocks extending across the tyre equator are provided with straight protrusions 6 collectively defining the emboss mark 7. Incidentally, the centre of the V-shape thereof is set at about one quarter of the tread width from one of the tread edges and as a result, one half of the tread pattern on one side of the tyre equator is completely different from the other half.

The above-explained width W, height d, cross-sectional shape are also utilised for the protrusions 6 in Figs.4 and 5.

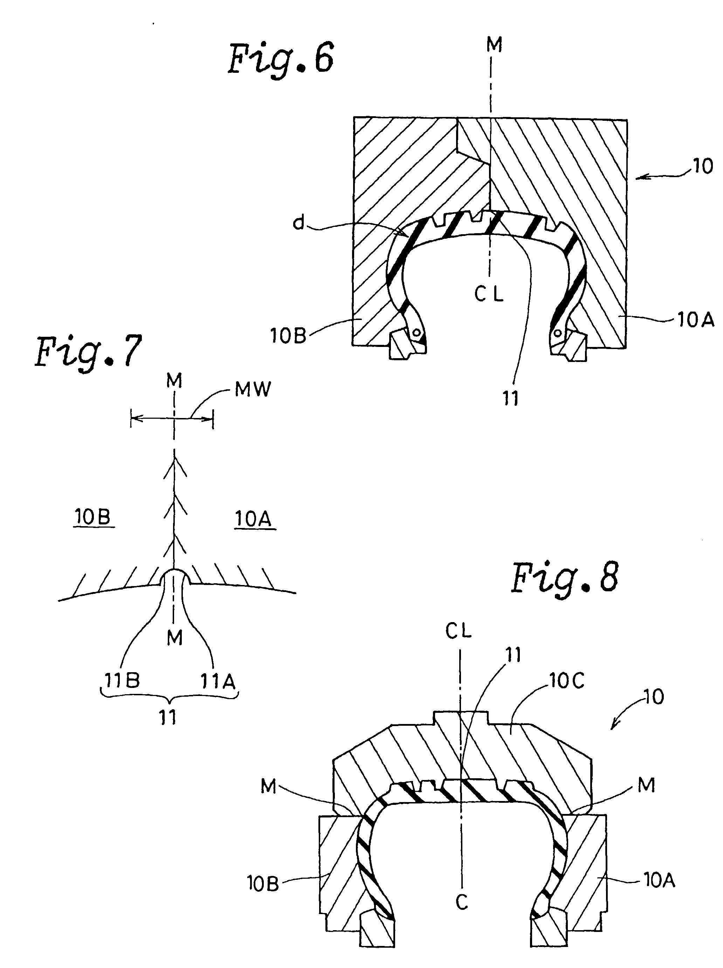

Figs.6-8 show tyre vulcanising moulds 10.

The above-mentioned emboss mark 7 must be formed in a tyre vulcanising process by using a negative impression 11 formed on the inside face of a tyre vulcanising mould 10 along the centre line CL corresponding to the tyre equatorial line as shown in Figs.6-8.

The mould 10 shown in Figs.6 and 7 comprises a lower unit 10A and an upper unit 10B which are dividable along the centre line CL corresponding to the tyre equator C. Therefore, the negative impression 11 of the emboss mark 7 is formed by rounding corners llA and 11B of the lower unit 10A and upper unit 10B along the mould dividing line M as shown in Fig.7

On the other hand, the mould 10 shown in Fig.8 comprises sector plates 10C movable in the radial direction and side plates 10A and 10B movable in the axial direction. The dividing lines M are not formed along the tyre equator or centre line. The impression 11 is disposed in the sector plates 10C. In any case, the impression 11 is formed in the narrow range MW corresponding to the above-mentioned range CW.

### Comparison Tests

Radial tyres of size 225/50R16 having the same tread pattern shown in Figs.1 and 2 were made, changing the dimensions of the protrusions 6. The steering stability and running noise of the tyres were evaluated by a test driver.

The specifications of the tyres and test results are given in the following table, wherein the results are indicated by an index based on that the reference tyre 2 is 100. The larger the index, the better the result.

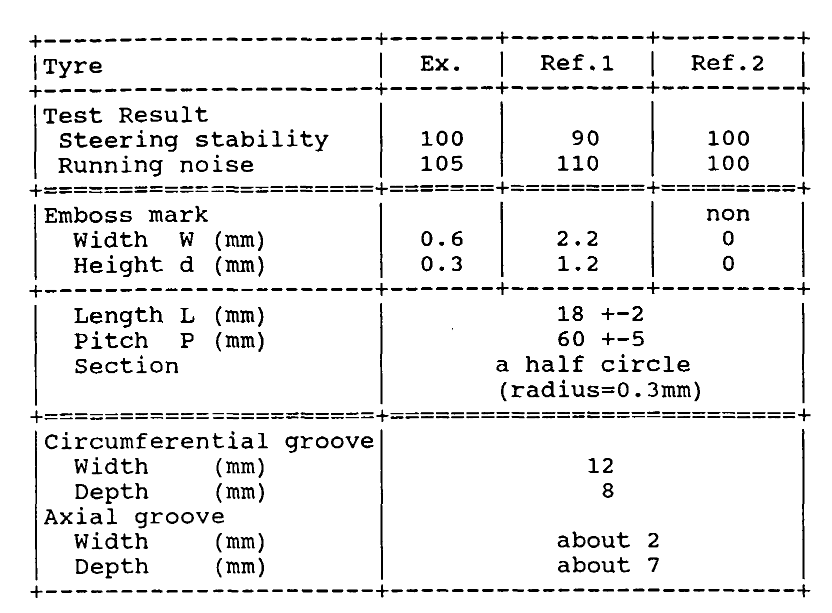

From the test, it was confirmed that, by limiting the dimensicns of the emboss mark within the above-explained ranges, the steering stability can be maintained at the same level as the reference tyre 2 having no protrusion. In the reference tyre 1, as the emboss mark is too large, the ground contacting area was decreased, and the grip performance was decreased.

Further, unexpected results were obtained. The running noise was reduced in the Example tyre in comparison with the reference tyre 2. Although the reference tyre 1 is better than the Example tyre, as the steering stability is too bad, the Example tyre is better in entirety.

The reason for reducing the running noise was investigated by the inventor. As the tyre rotates, the block with the emboss mark approaches the road surface, and the emboss mark first contacts with the road surface. Then, the block itself contacts. As a result, the energy of impact of the block is dispersed, and the so called impact noise which is remarkable in block type tread patterns decreases. Therefore, the running noise can be reduced.

The present invention can be applied to both the radial ply tyres and bias ply tyres for various purposes, e.g. passenger car, truck, bus, motorcycle, aeroplane and the like, but more preferably applied to pneumatic tyres for passenger car and pneumatic tyres for motorcycle, especially which have a block type tread pattern shown exemplary in Figs.1 and 5 because the emboss mark softens the impact energy of the blocks against the road surface to reduce the running noise.

## Claims

1. A pneumatic tyre comprising at least one groove (3A, 3B) extending continuously in the circumferential direction in a zigzag configuration to define at least two tread elements, at least one of said tread elements extending across the tyre equator (C), wherein said at least one tread element is provided with an emboss mark (7) extending straight in the tyre circumferential direction, said emboss mark (7) being disposed substantially on the tyre equator (C), characterised in that said at least one circumferential groove is a zigzag groove (3A) centred on the tyre equator (C), and said at least two tread elements comprise blocks (5) on one side of the zigzag groove (3A) and blocks (5) on the other side of the zigzag groove (3A), and the blocks (5) include blocks (5c) extending axially across the tyre equator (C) which are provided on the top faces with protrusions (6) which extend straight in the tyre circumferential direction to collectively define said emboss mark (7).

2. A pneumatic tyre according to claim 1, characterised in that the height (d) of the emboss mark (7) measured radially outwardly of the tyre from the tread face is more than 0.2 mm but less than 1.0 mm, and the width (W) of the emboss mark (7), measured axially of the tyre at the tread surface, is more than 0.3 mm but less than 2.0 mm.

3. A pneumatic tyre according to claim 1 or 2, characterised in that the circumferential length (L) of each said protrusion (6) is more than 10 mm, and the circumferential pitch length (P) of said protrusions is less than 10 times the length (L).

4. A pneumatic tyre according to any of claims 1-3, characterised in that said emboss mark (7) comprises two parallel protrusions (6) extending straight in the tyre circumferential direction, and the axial distance (W1) therebetween is more than 0.3 mm but less than 2.0 mm.

## Patentansprüche

1. Luftreifen mit mindestens einer Rille (3A, 3B), die sich kontinuierlich in der Umfangsrichtung in einer Zickzack-Gestalt erstreckt, so daß mindestens zwei Laufflächenelemente definiert sind, wobei mindestens eines der Laufflächenelemente sich über den Reifenäquator (C) hinweg erstreckt, wobei das mindestens eine Laufflächenelement mit einer Prägemarkierung (7) versehen ist, die sich gerade in der Umfangsrichtung des Reifens erstreckt, wobei die Prägemarkierung (7) im wesentlichen auf dem Reifenäquator (C) angeordnet ist, dadurch gekennzeichnet, daß die mindestens eine Umfangsrille eine Zickzack-Rille (3A) ist, die auf dem Reifenäquator (C) zentriert ist, und daß die mindestens zwei Laufflächenelemente Blöcke (5) auf einer Seite der Zickzack-Rille (3A) und Blöcke (5) auf der anderen Seite der Zickzack-Rille (3A) umfassen, und daß die Blöcke (5) Blöcke (5C) umfassen, die sich axial über den Reifenäquator (C) hinweg erstrecken und auf den oberen Flächen mit Vorsprüngen (6) versehen sind, die sich gerade in der Umfangsrichtung des Reifens erstrecken, so daß sie zusammen die Prägemarkierung (7) definieren.

2. Luftreifen nach Anspruch 1,
dadurch gekennzeichnet, daß die Höhe (d) der Prägemarkierung (7), radial außen in bezug auf den Reifen gemessen, von der Laufstreifenfläche größer als 0,2 mm jedoch kleiner als 1,0 mm ist, und daß die Breite (W) der Prägemarkierung (7), axial in bezug auf den Reifen gemessen, an der Laufflächenoberfläche größer als 0,3 mm jedoch kleiner als 2,0 mm ist.

3. Luftreifen nach Anspruch 1 oder 2,
dadurch gekennzeichnet, daß die Umfangslänge (L) jedes Vorsprungs (6) größer als 10 mm ist, und daß die Umfangsteilungslänge (P) der Vorsprünge kleiner als das 10fache der Länge (L) ist.

4. Luftreifen nach einem der Ansprüche 1-3,
dadurch gekennzeichnet, daß die Prägemarkierung (7) zwei parallele Vorsprünge (6) umfaßt, die sich gerade in der Umfangsrichtung des Reifens erstrecken, und daß der axiale Abstand (W1) dazwischen größer als 0,3 mm jedoch kleiner als 2,0 mm ist.

## Revendications

1. Pneumatique comprenant au moins une gorge (3A, 3B) qui s'étend de façon continue dans la direction circonférentielle avec une configuration en zigzag pour la délimitation d'au moins deux éléments de bande de roulement, l'un au moins des éléments de bande de roulement s'étendant transversalement à l'équateur du pneumatique (C), dans lequel l'élément de bande de roulement au moins possède une marque en relief (7) qui s'étend de façon rectiligne dans la direction circonférentielle du pneumatique, la marque en relief (7) étant disposée pratiquement sur l'équateur du pneumatique (C), caractérisé en ce que la gorge circonférentielle au moins est une gorge en zigzag (3A) centrée sur l'équateur du pneumatique (C), et les deux éléments de bande de roulement au moins comprennent des blocs (5) d'un premier côté de la gorge en zigzag (3A) et des blocs (5) de l'autre côté de la gorge en zigzag (3A), et les blocs (5) comprennent des blocs (5C) qui s'étendent axialement en direction transversale à l'équateur du pneumatique (C) qui possède, aux faces supérieures, des saillies (6) qui s'étendent sous forme rectiligne dans la direction circonférentielle du pneumatique pour délimiter collectivement la marque en relief (7).

2. Pneumatique selon la revendication 1, caractérisé en ce que la hauteur (d) de la marque en relief (7) mesurée radialement vers l'extérieur du pneumatique depuis la face de la bande de roulement dépasse 0,2 mm mais est inférieure à 1,0 mm, et la largeur (W) de la marque en relief (7), mesurée suivant l'axe du pneumatique à la surface de la bande de roulement, est supérieure à 0,3 mm mais inférieure à 2,0 mm.

3. Pneumatique selon la revendication 1 ou 2, caractérisé en ce que la longueur circonférentielle (L) de chaque saillie (6) dépasse 10 mm, et la longueur du pas circonférentiel (P) des saillies est inférieure à dix fois la longueur (L).

4. Pneumatique selon l'une quelconque des revendications 1 à 3, caractérisé en ce que la marque en relief (7) comporte deux saillies parallèles (6) qui s'étendent sous forme rectiligne dans la direction circonférentielle du pneumatique, et la distance axiale (W1) comprise entre elles dépasse 0,3 mm mais est inférieure à 2,0 mm.
